# EUROPEAN PATENT APPLICATION

(11) **EP 4 769 122 A1**
(43) Date of publication of application: **01.07.2026**
(21) Application number: 25215034.7
(22) Date of filing: 11.11.2025
(51) Int. Cl.: G06F 8/65, G06F 8/654, G06F 8/71

(54) **UPGRADING THE SOFTWARE FOR CONTROLLING ENERGY STORAGE DEVICES DEPENDING ON THE EXISTENCE OF ADDRESS SELF-ALLOCATION FUNCTION AND MASTER-SLAVE COMMUNICATION**

(30) Priority: 31.12.2024 CN 202411996641
(71) Applicant: Zhejiang Leapenergy Technology Co., Ltd., Hangzhou, Zhejiang 310000 (CN); Zhejiang Leapmotor Technology Co., Ltd, Hangzhou, Zhejiang 310051 (CN)
(72) Inventor: XU, Jian, Hangzhou, 310000 (CN); ZHOU, Tuo, Hangzhou, 310000 (CN); ZHUANG, Wei, Hangzhou, 310000 (CN); CHEN, Tuo, Hangzhou, 310000 (CN); YU, Yangdong, Hangzhou, 310000 (CN)
(74) Representative: De Arpe Tejero, Manuel

(57) **Abstract**

A software upgrade method, an apparatus (50), a device (60), and a storage medium (70) are provided. The software upgrade method is performed by an energy storage device to be upgraded. The method includes: determining (S11) a version type of the energy storage device to be upgraded; and based on the version type of the energy storage device to be upgraded, determining (S12) a target interaction mode of at least one chip in the energy storage device to be upgraded to use the target interaction mode to receive a software upgrade protocol sent by a preset device, wherein an interaction mode of the chip includes at least one of an internal channel interaction, an external channel interaction, and an internal-external channel interaction.

## Description

### TECHNICAL FIELD

The present disclosure relates to the field of computer technologies, in particular to a software upgrade method, an apparatus, a device, and a storage medium.

### BACKGROUND

There are different version types of an energy storage device in the related art, and each version type of the energy storage device corresponds to a software. From the production start of the energy storage device, it is necessary to pay attention to whether the software matches the corresponding version type. While the energy storage device is being upgraded, the software corresponding to the energy storage device is required to be upgraded simultaneously. However, when different version types of energy storage devices require the addition of the same functional requirement, multiple software must be manually modified and tested simultaneously. Furthermore, the process of manually judging and identifying the version type of the energy storage device and performing program burning work for the software corresponding different version types is required. However, such the process of manually judging and identifying the version type of the energy storage device and performing program burning work for the software corresponding different version types leads to complicated operations in the software upgrade process and low accuracy, such that in the entire software upgrade process, the software upgrade efficiency is low.

For the defects in the related art, how to provide a solution that can improve the software upgrade efficiency of the energy storage device is a technical problem urgently to be solved by those skilled in the art.

### SUMMARY

The present disclosure at least provides a software upgrade method, an apparatus, a device, and a storage medium.

The present disclosure provides a software upgrade method performed by an energy storage device to be upgraded. The method includes: determining a version type of the energy storage device to be upgraded; and based on the version type of the energy storage device to be upgraded, determining a target interaction mode of at least one chip in the energy storage device to be upgraded to use the target interaction mode to receive a software upgrade protocol sent by a preset device, wherein an interaction mode of the chip includes one of an internal channel interaction, an external channel interaction, and an internal-external channel interaction.

In some embodiments, the based on the version type of the energy storage device to be upgraded, determining a target interaction mode of at least one chip in the energy storage device to be upgraded, includes: determining whether the at least one chip includes a target chip; wherein the target interaction mode of the target chip is inconsistent with a current interaction mode of the at least one chip; and adjusting the current interaction mode of the target chip to the target interaction mode.

In some embodiments, the version type includes one of a first version, a second version, and a third version; in the energy storage device to be upgraded in the first version, a first chip and a second chip are in a working state; in the energy storage device to be upgraded in the second version, the first chip is in the working state; in the energy storage device to be upgraded in the third version, the first chip and a third chip are in the working state; the adjusting the current interaction mode of the target chip to the target interaction mode, includes: in a case where the version type is the first version, configuring the first chip in an external channel and configuring the second chip in an internal channel to enable the first chip in the external channel to receive the software upgrade protocol sent by the preset device; in a case where the version type is the second version, configuring the first chip in the external channel to enable the first chip in the external channel to receive the software upgrade protocol sent by the preset device; in a case where the version type is the third version, configuring the first chip in the internal channel and configuring the third chip in the external channel to enable the third chip in the external channel to receive the software upgrade protocol sent by the preset device.

In some embodiments, in a case where the version type is the first version, the target interaction mode includes a first target interaction mode; in the first target interaction mode, an interaction mode of the first chip is the internal-external channel interaction, and an interaction mode of the second chip is the internal channel interaction; in a case where the version type is the second version, the target interaction mode includes a second target interaction mode; in the second target interaction mode, the interaction mode of the first chip is an external channel interaction; in a case where the version type is the third version, the target interaction mode includes a third target interaction mode; in the third target interaction mode, the interaction mode of the third chip is the internal-external channel interaction, and the interaction mode of the first chip is the internal channel interaction.

In some embodiments, in a case where the version type is the first version, the first chip communicates internally with the second chip and communicates externally with the preset device via the internal-external channel interaction; in a case where the version type is the second version, the first chip communicates externally with the preset device via the external channel interaction; in a case where the version type is the third version, the third chip communicates internally with the first chip and communicate externally with the preset device via the internal-external channel interaction.

In some embodiments, in a case where the version type is the first version, the first chip receives the software upgrade protocol from the preset device, and sends the software upgrade protocol to the second chip; in a case where the version type is the second version, the first chip receives the software upgrade protocol from the preset device; in a case where the version type is the third version, the third chip receives the software upgrade protocol from the preset device, and sends the software upgrade protocol to the first chip.

In some embodiments, the preset device is an inverter.

In some embodiments, the determining a version type of the energy storage device to be upgraded, includes: determining whether the energy storage device to be upgraded has an address self-allocation function, wherein the address self-allocation function is configured to perform an identifier allocation work for the second chip; and in a case where the energy storage device to be upgraded has the address self-allocation function, determining the version type of the energy storage device to be upgraded as the first version.

In some embodiments, the determining a version type of the energy storage device to be upgraded, includes: in a case where the energy storage device to be upgraded does not have the address self-allocation function, determining whether the energy storage device to be upgraded has a master-slave communication; in a case where the energy storage device to be upgraded does not have the master-slave communication, determining the version type of the energy storage device to be upgraded as the second version; in a case where the energy storage device to be upgraded has the master-slave communication, determining the version type of the energy storage device to be upgraded as the third version.

In some embodiments, the master-slave communication indicates that a plurality of types of chips in the working state.

In some embodiments, the energy storage device to be upgraded in the first version includes a plurality of second chips, the in a case where the version type is the first version, configuring the first chip in an external channel and configuring the second chip in an internal channel, includes: the in a case where the version type is the first version, performing an address self-allocation for each of the plurality of second chips to obtain a plurality of allocated second chips; determining the target interaction mode as configuring the first chip in the external channel and configuring the plurality of allocated second chips in the internal channel.

In some embodiments, the energy storage device to be upgraded in the third version includes a plurality of the third chips, the in a case where the version type is the third version, configuring the first chip in the internal channel and configuring the third chip in the external channel, includes: in a case where the version type is the third version, performing a cluster address allocation for each of the plurality of third chips to obtain a plurality of allocated third chips; determining the target interaction mode as configuring the first chip in the internal channel and configuring the plurality of allocated third chips in the external channel.

The present disclosure provides a software upgrade apparatus disposed in an energy storage device to be upgraded, and the apparatus includes: a first determination module, configured to determine a version type of the energy storage device to be upgraded; and a second determination module, configured to, based on the version type of the energy storage device to be upgraded, determine a target interaction mode of at least one chip in the energy storage device to be upgraded.

The present disclosure provides an electronic device including a memory and a processor; the memory stores a program instruction, and the processor is configured to call the program instruction from the memory to perform any one of the above methods.

The present disclosure provides a computer-readable storage medium storing a program instruction; the program instruction, when executed by a processor, is configured to implement any one of the above methods.

The above solutions, by determining the version type of the energy storage device to be upgraded, based on the version type of the energy storage device to be upgraded, determining a target interaction mode of at least one chip in the energy storage device to be upgraded to use the target interaction mode to receive a software upgrade protocol sent by a preset device, such that a universal software upgrade protocol may be configured to upgrade software of different version types of energy storage devices to be upgraded, thereby achieving software reuse and improving the efficiency of software upgrade.

### BRIEF DESCRIPTION OF THE DRAWINGS

The drawings herein are incorporated into the description and constitute a part of the description, these drawings show some embodiments in accordance with the present disclosure and are used together with the description to explain the technical solutions of the present disclosure.
FIG. 1 is a first flowchart of a software upgrade method according to an embodiment of the present disclosure.
FIG. 2 is a second flowchart of a software upgrade method according to an embodiment of the present disclosure.
FIG. 3 is a third flowchart of a software upgrade method according to an embodiment of the present disclosure.
FIG. 4 is a fourth flowchart of a software upgrade method according to an embodiment of the present disclosure.
FIG. 5 is a structural schematic diagram of a software upgrade apparatus according to an embodiment of the present disclosure.
FIG. 6 is a structural schematic diagram of an electronic device according to an embodiment of the present disclosure.
FIG. 7 is a structural schematic diagram of a computer-readable storage medium according to an embodiment of the present disclosure.

### DETAILED DESCRIPTIONS

The following solution of some embodiments of the present disclosure is described in detail in combination with the drawings.

In the following description, for explanation rather than limitation, details such as system structures, interfaces, techniques, etc. are proposed to thoroughly understand the present disclosure.

The term "and/or" herein is only a descriptive association relationship of associated objects, indicating that three relationships may exist, for example, A and/or B may indicate: alone A, both A and B, alone B these three situations. In addition, the character "/" herein indicates that the front and back associated objects are an "or" relationship. Furthermore, "multiple" herein indicates two or more than two. In addition, the term "at least one" herein indicates any one of multiple or any combination of at least two of multiple, for example, including at least one of A, B, C may indicate including any one or more elements selected from the set composed of A, B, and C.

Some embodiments of the present disclosure provide a software upgrade method and a software upgrade apparatus. The application scenario of the software upgrade method includes but are not limited to upgrade of an energy storage device for user. The performing subject of the software upgrade method may be a software upgrade apparatus. For example, the software upgrade apparatus may be disposed in a terminal device or a server or other processing devices, the terminal device may be a device for software upgrade, a user equipment (UE), a mobile device, a user terminal, a terminal, a cellular phone, a cordless phone, a personal digital assistant (PDA), a handheld device, a computing device, or a vehicle-mounted device, etc. In some embodiments, the software upgrade method may be implemented by a processor calling computer-readable instructions stored in a memory.

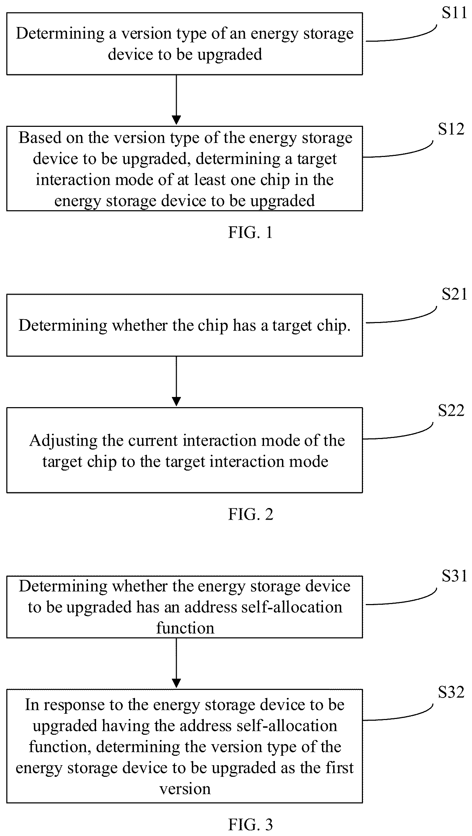

Please refer to FIG. 1, FIG. 1 is a first flowchart of a software upgrade method according to an embodiment of the present disclosure. In some embodiments, the software upgrade method is performed by an energy storage device to be upgraded, and the software upgrade method may include the following operations.

The Operation S11 may include: determining a version type of an energy storage device to be upgraded.

The energy storage device to be upgraded may be an energy storage device for user. In some embodiments, the energy storage device for user may refer to an energy storage system for family use. The energy storage device to be upgraded may include several chips. Types of some of the several chips included in the energy storage device to be upgraded may be different. Each energy storage device to be upgraded is equipped with a same target software. The target software may be applied to multiple version types of energy storage devices to be upgraded. In the process of performing software upgrade on different version types of energy storage devices to be upgraded, relay control logics of different version types of energy storage devices to be upgraded may be different. It can be understood that the energy storage device to be upgraded may include several relays. In some embodiments, the several relays may include a relay inside a battery pack, also called a relay inside the pack, the above relay inside the pack is a negative relay. The several relays may include a relay inside the high-voltage box, the above a relay inside the high-voltage box may include a negative relay, a positive relay, and a pre-charge relay. In some embodiments, when the energy storage device to be upgraded is in the first version, the above several relays may include the relay inside the pack and the relay inside the high-voltage box. In some embodiments, when the energy storage device to be upgraded is in the second version or the third version, the above several relays may include the relay inside the high-voltage box.

After the above operation S11, according to the determined version type being different, the control instructions sent by target software corresponding to different version types of energy storage devices to be upgraded to relays may be the same or different. Therefore, preset processing on the relays of different version types of energy storage devices to be upgraded may be perform, so that the relay in the energy storage device to be upgraded after the preset processing may receive the control instruction sent by the target software and perform control functions related to the control instruction.

When the energy storage device to be upgraded is in different version types, at least some of several chips are in a working state, and data communication is performed between the chips in the working state. Types of the chips may include but is not limited to a type corresponding to a first chip, a type corresponding to a second chip, and a type corresponding to a third chip. The types of different chips may be determined according to a type of a management unit related to a battery. A management unit related to the first chip is a Battery Cluster Management Unit (BCMU). A management unit related to the second chip is a Battery System Management Unit (BSMU). A management unit related to the third chip is a Battery Array Management Unit (BAMU). It can be understood that the first chip may be a first chip BCMU. The second chip may be a second chip BSMU. The third chip may be a third chip BAMU.

The version type of the energy storage device to be upgraded may be any one of a first version, a second version, and a third version. The process of upgrading the energy storage device to be upgraded may be an adjustment between version types of the energy storage device to be upgraded. In some embodiments, the energy storage device to be upgraded may be adjusted from the first version to the third version, or from the second version to the third version. In some embodiments, the energy storage device to be upgraded may be adjusted from the third version to the first version, or from the third version to the second version. The process of adjusting between version types of the energy storage device to be upgraded involves switching the working mode of the chip in the energy storage device to be upgraded. It can be understood that when the working mode of any chip is the working state, the chip may perform normal processing and corresponding control operations according to a communication protocol. When the working mode of any chip is a sleep state, the chip cannot be used normally. In addition, when the version type is the first version, the energy storage device to be upgraded may be called a first-generation device, also called an integrated product. When the version type is the second version, the energy storage device to be upgraded may be called a second-generation device, also called a second-generation product. When the version type is the third version, the energy storage device to be upgraded may be called a third-generation device, also called a parallel device project.

When the energy storage device to be upgraded is in different version types, at least some of the several chips are in a working state. In some embodiments, when the energy storage device to be upgraded is in the first version, the first chip and the second chip in the energy storage device to be upgraded are in the working state. When the energy storage device to be upgraded is in the first version, the number of first chips in the working state in the energy storage device to be upgraded is one, and the number of second chips in the working state is at least one. The number of second chips is limited by the working voltage of a component. In some embodiments, when the energy storage device to be upgraded is in the first version, there is one first chip BCMU, and one to eight second chip BSMU. When the energy storage device to be upgraded is in the first version, the interaction mode required by the energy storage device to be upgraded is a first target interaction mode. In the first target interaction mode, the interaction mode of the first chip is the internal-external channel interaction, and the interaction mode of the second chip is the internal channel interaction. In some embodiments, when the energy storage device to be upgraded is in the first version, the interaction mode of the chip may refer to the communication mode of the second chip only for an internal communication. The interaction mode of the second chip is the internal channel interaction. In some embodiments, when the energy storage device to be upgraded is in the first version, the interaction mode of the chip may refer to the communication mode of the first chip. The interaction mode of the first chip is the internal-external channel interaction. In the internal-external channel interaction, the first chip may communicate internally with the second chip, and the first chip may communicate externally with a preset device. The preset device may be an inverter. It can be understood that the first chip BCMU in the first version may be configured for the internal communication with the second chip and the external interaction with the inverter (such as Power Conversion System (PCS)).

In some embodiments, when the energy storage device to be upgraded is in the second version, the first chip in the energy storage device to be upgraded is in a working state. When the energy storage device to be upgraded is in the second version, the number of first chips in the working state in the energy storage device to be upgraded may be at least one. When the energy storage device to be upgraded is in the second version, the interaction mode required by the energy storage device to be upgraded is the second target interaction mode. In the second target interaction mode, the interaction mode of the first chip is the external channel interaction. In some embodiments, when the energy storage device to be upgraded is in the second version, the interaction mode of the chip may refer to the communication mode of the first chip only for external communication. The interaction mode of the first chip is the external channel interaction. The external channel interaction may mean that the first chip only communicates externally with the preset device. The preset device may be an inverter. It can be understood that the first chip BCMU in the second version is configured for external interaction with the inverter (such as PCS).

In some embodiments, when the energy storage device to be upgraded is in the third version, the first chip and the third chip in the energy storage device to be upgraded are in a working state. When the energy storage device to be upgraded is in the third version, the interaction mode required by the energy storage device to be upgraded is the third target interaction mode. In the third target interaction mode, the interaction mode of the third chip is the internal-external channel interaction, and the interaction mode of the first chip is the internal channel interaction. In some embodiments, when the energy storage device to be upgraded is in the third version, the interaction mode of the chip may refer to the communication mode of the first chip only for internal communication. The interaction mode of the first chip is the internal channel interaction. In some embodiments, when the energy storage device to be upgraded is in the third version, the interaction mode of the chip may refer to the communication mode of the third chip. The interaction mode of the third chip is the internal-external channel interaction. The internal-external channel interaction may mean that the third chip may communicate internally with the first chip, and the third chip may communicate externally with the preset device. The preset device may be an inverter. It can be understood that the third chip BAMU in the third version is configured for internal communication with the first chip and external interaction with the inverter (such as PCS). The first chip BCMU is only configured to communicate internally.

In different version types, the energy storage device to be upgraded uses the same target software. While the energy storage device to be upgraded is being upgraded, the target software is required to be upgraded simultaneously. By sending a universal software upgrade protocol to the chip in different version types of energy storage devices to be upgraded, the software upgrade of energy storage devices to be upgraded may be completed. That is, the upgrade of the target software of the energy storage device to be upgraded is completed. The upgrade channel configuration methods for the chips of different version types of energy storage devices to be upgraded are different. When the version type of the energy storage device to be upgraded uses the matched upgrade channel, the energy storage device to be upgraded may complete the software upgrade corresponding to the universal upgrade protocol.

It can be understood that some embodiments of the present disclosure sort out differences of different version types of energy storage devices to be upgraded. The energy storage device to be upgraded in the first version adopts a three-layer architecture, the slave control second chip BSMU performs preliminary obtaining and data processing, and transmits the data to the master control first chip BCMU. The energy storage device to be upgraded in the second version may be called a second-generation product and an integrated product. The energy storage device to be upgraded in the second version directly omits the slave control second chip BSMU compared to the energy storage device to be upgraded in the first version, adopting a two-layer architecture. The energy storage device to be upgraded in the third version has a parallel-device expansion requirement, needs to perform parallel-device operation. Two clusters of first chips BCMU no longer directly control the system, but follow the instructions of the third chip BAMU for control, etc. The present disclosure, according to requirement environments, or different version identification codes of energy storage to be upgraded, performs software adaptation. After configuration is completed, disconnecting and then reconnecting the low voltage may match the current usage scenario.

In some embodiments, the energy storage device to be upgraded in the first version may be called a first-generation stacked product. The usage scenario of the energy storage device to be upgraded in the first version may include following. Multiple packs form a system, each pack has an independent second chip BSMU, and each second chip BSMU may communicates with the first chip BCMU to achieve disconnecting and then reconnecting the high voltage. The number of the first chips BCMU is one, and the number of the second chips BSMU is one to eight (limited by the working voltage of each component). To reduce communication address conflicts between different second chips BSMU and the first chip BCMU, this first-generation stacked product introduces an address self-allocation scheme. The first chip BCMU may initiate an allocation process to the second chip BSMU. After an identifier (ID) allocation is completed, the second chip BSMU and the first chip BCMU may perform normal communication, and data of different packs may be distinguished through different IDs.

In some embodiments, the energy storage device to be upgraded in the second version may be called a second-generation stacked product, cancels the second chip BSMU in each pack, and only a daisy-chain (i.e., a point-to-point series topology) is configured for to obtain information of a cell. In terms of usage scenario, the energy storage device to be upgraded in the second version is tend to be the architecture of an integrated device, the difference is that the power of the second-generation stacked product may be decided by the customer. Increasing or decreasing power may be implemented by adding or reducing packs, while the integrated device has fixed power at the factory.

In some embodiments, in the case where the customer is not satisfied with a user usage scenario of 25-degree, the height of the stacked pack is too high and has safety hazards, and the increase of the voltage platform causes some components not to support use in this environment, so that the energy storage device to be upgraded in the third version may be introduced a parallel-device usage scheme. Multiple clusters may be used in parallel, and the first chip may perform external communication and internal control.

It can be understood that the first chip is in the working state when the energy storage device to be upgraded is in different version types, the performing subject of the above software upgrade method may be the first chip in the energy storage device to be upgraded.

Operation S12 may include: based on the version type of the energy storage device to be upgraded, determining a target interaction mode of at least one chip in the energy storage device to be upgraded.

Based on the version type of the energy storage device to be upgraded, a target interaction mode of at least one chip in the energy storage device to be upgraded is determine to use the target interaction mode to receive a software upgrade protocol sent by a preset device. The interaction mode of the chip is at least one of internal channel interaction, external channel interaction, and internal-external channel interaction.

The target interaction mode is configured to receive the software upgrade protocol sent by the preset device. The preset device is configured for remote upgrade. The preset device may be the above inverter. The software upgrade protocol may be a universal upgrade protocol. The software upgrade protocol is suitable for the upgrade process of all version types of the energy storage device to be upgraded.

In some embodiments, when the version type of the energy storage device to be upgraded is the first version, the target interaction mode of the chip in the energy storage device to be upgraded is determine as the above first target interaction mode. In some embodiments, in the first target interaction mode, the interaction mode of the first chip is the internal-external channel interaction. The inverter sends the software upgrade protocol to the first chip, and the first chip sends the software upgrade protocol to the second chip, thus completing the software upgrade of the chip. In some embodiments, when the version type of the energy storage device to be upgraded is the second version, the target interaction mode of the chip in the energy storage device to be upgraded is determined as the above second target interaction mode. In some embodiments, in the second target interaction mode, the interaction mode of the first chip is the external channel interaction. The inverter sends the software upgrade protocol to the first chip, thus completing the software upgrade of the chip. In some embodiments, when the version type of the energy storage device to be upgraded is the third version, the target interaction mode of each chip in the energy storage device to be upgraded is determined as the above third target interaction mode. In some embodiments, in the third target interaction mode, the interaction mode of the third chip is the internal-external channel interaction. The inverter sends the software upgrade protocol to the third chip, and the third chip sends the software upgrade protocol to the first chip, thus completing the software upgrade of the chip.

The above solution, by determining the version type of the energy storage device to be upgraded, based on the version type of the energy storage device to be upgraded, determining a target interaction mode of at least one chip in the energy storage device to be upgraded to use the target interaction mode to receive a software upgrade protocol sent by a preset device, such that a universal software upgrade protocol may be configured to upgrade software of different version types of energy storage devices to be upgraded, thereby achieving software reuse and improving the efficiency of software upgrade.

Please refer to FIG. 2, FIG. 2 is a second flowchart of a software upgrade method according to an embodiment of the present disclosure.

In some embodiments, the above operation S12 may include the following operations. Operation S21 may include: determining whether the chip has a target chip. The target interaction mode of the target chip is inconsistent with the current interaction mode of the chip. Operation S22 may include: adjusting the current interaction mode of the target chip to the target interaction mode.

The process of upgrading the energy storage device to be upgraded may be adjustment between version types of the energy storage device to be upgraded. In some embodiments, the energy storage device to be upgraded may be adjusted from the first version to the third version, or from the second version to the third version. In some embodiments, the target interaction mode may be the third target interaction mode corresponding to the third version. In some embodiments, in the case of adjustment from the first version to the third version, the current interaction mode may be the above first target interaction mode. At this time, the target chips are the first chip, the second chip, and the third chip. The above operation S22 may be the process of adjusting from the above first target interaction mode to the third target interaction mode. In some embodiments, the interaction mode of the first chip in the target chips is adjusted from internal-external channel interaction to internal channel interaction, the second chip in the target chips is adjusted from the working state to the sleep state, and the third chip in the target chips is adjusted from the sleep state to the internal-external channel interaction. In the case of adjustment from the second version to the third version, the above operation S22 may be the process of adjusting from the above second target interaction mode to the third target interaction mode, the process is not repeated here.

In some embodiments, the energy storage device to be upgraded may be adjusted from the third version to the first version, or from the third version to the second version. The process of adjusting between version types of the energy storage device to be upgraded involves switching the working mode of the chip in the energy storage device to be upgraded. In the case of adjustment from the third version to the first version, the above operation S22 may be the process of adjusting from the above third target interaction mode to the first target interaction mode, the process is not repeated here. In the case of adjustment from the third version to the second version, the above operation S22 may be the process of adjusting from the above third target interaction mode to the second target interaction mode, the process is not repeated here.

In addition, some embodiments of the present disclosure take into account that in the process of performing software upgrade on different version types of energy storage devices to be upgraded, relay control logics of different version types of energy storage devices to be upgraded may be different. After the above operation S11, according to the determined version type being different, the control instructions sent by target software corresponding to different version types of energy storage devices to be upgraded to relays may be the same or different. Therefore, preset processing on the relays of different version types of energy storage devices to be upgraded may be perform, so that the relay in the energy storage device to be upgraded after the preset processing may receive the control instruction sent by the target software and perform control functions related to the control instruction. The above preset processing may be a relay control. In some embodiments, when the version type determined in the above operation S11 is the first version, it is necessary to additionally control the above relay inside the pack, for example, after closing the relay inside the pack first, then the same relay in all version types of the energy storage device to be upgraded is uniformly controlled, the same relay is the above relay inside the high-voltage box. In some embodiments, when the version type determined in the above operation S11 is the second version or the third version, the same relay in all version types is uniformly controlled, the same relay is the above relay inside the high-voltage box.

In some embodiments, in the case of adjustment from the first version to the third version, in response to the voltage difference corresponding to the two first chips being less than or equal to a preset voltage difference, the relays inside the pack corresponding to the two first chips are directly closed first, then the main negative relay and the pre-charge relay in the high-voltage box are closed, after pre-charge is completed, the main positive relay is closed, and the pre-charge relay is disconnected. It can be understood that the operation of uniformly controlling the same relays in all version types may be closing the main negative relay and the pre-charge relay in the high-voltage box, after pre-charge is completed, the main positive relay is closed, and the pre-charge relay is disconnected. In some embodiments, in the case of adjustment from the second version to the third version, the above operation of uniformly controlling the same relays in all version types is directly performed.

In some embodiments, in the case of adjustment from the third version to the first version or the second version, the third chip BAMU control is adjusted to the first chip BCMU control. It can be understood that different chip controls are configured for the chip to send control instruction to the relay to achieve control functions related to the control instruction.

It can be considered that by adjusting the current interaction mode of the target chip to the target interaction mode, the upgrade channel configuration of the energy storage device to be upgraded may be achieved, so as to use the target interaction mode to receive the software upgrade protocol sent by the preset device, thereby completing the software upgrade of different version types of energy storage devices to be upgraded through a universal software upgrade protocol, achieving software reuse, and improving the efficiency of software upgrade.

In some embodiments, the version type is one of a first version, a second version, and a third version. In the energy storage device to be upgraded in the first version, a first chip and a second chip are in a working state; in the energy storage device to be upgraded in the second version, a first chip is in a working state; in the energy storage device to be upgraded in the third version, a first chip and a third chip are in a working state, the operation of adjusting the current interaction mode of the target chip to the target interaction mode may include the following operation: in response to the version type being the first version, configuring the first chip in the external channel and configuring the second chip in the internal channel to enable the first chip in the external channel to receive the software upgrade protocol sent by the preset device; or in response to the version type being the second version, configuring the first chip in the external channel to enable the first chip in the external channel to receive the software upgrade protocol sent by the preset device; or in response to the version type being the third version, configuring the first chip in the internal channel and configuring the third chip in the external channel to enable the third chip in the external channel to receive the software upgrade protocol sent by the preset device.

The operation of adjusting the current interaction mode of the target chip to the target interaction mode may be performing channel configuration for the chip in the energy storage device to be upgraded based on the target interaction mode. The internal channel may be a channel that chips may communicate with each other. The external channel may be a channel that the chip may communicate with the above preset device.

In some embodiments, when the version type of the energy storage device to be upgraded is the first version, the target interaction mode of the chip in the energy storage device to be upgraded is determined as the above first target interaction mode. The first chip is configured in the external channel, so that the interaction mode of the first chip is the internal-external channel interaction. In this way, the first chip may communicate internally with the second chip, and may communicate externally with the preset device. The second chip is configured in the internal channel to achieves internal communication between the first chip and the second chip. The inverter may send the software upgrade protocol to the first chip, and the first chip may send the software upgrade protocol to the second chip, thus completing the software upgrade of the chip.

In some embodiments, when the version type of the energy storage device to be upgraded is the second version, the target interaction mode of the chip in the energy storage device to be upgraded is determined as the above second target interaction mode. The first chip is configured in the external channel to enable the interaction mode of the first chip to be the external channel interaction, achieving that the first chip only communicates externally with the preset device. The first chip in the external channel may receive the software upgrade protocol sent by the inverter, thus completing the software upgrade of the chip. The inverter may send the software upgrade protocol to the first chip, thus completing the software upgrade of the chip.

In some embodiments, when the version type of the energy storage device to be upgraded is the third version, the target interaction mode of the chip in the energy storage device to be upgraded is determined as the above third target interaction mode. The third chip is configured in the external channel to enable the interaction mode of the third chip to be the internal-external channel interaction, achieving that the third chip may communicate internally with the first chip, and the third chip may communicate externally with the preset device. The first chip is configured in the internal channel to achieve the internal communication between the first chip and the third chip. The inverter may send the software upgrade protocol to the third chip, and the third chip may send the software upgrade protocol to the first chip, thus completing the software upgrade of the chip. In some embodiments, in the third target interaction mode, the interaction mode of the third chip is the internal-external channel interaction. The inverter may send the software upgrade protocol to the third chip, and the third chip may send the software upgrade protocol to the first chip, thus completing the software upgrade of the chip.

It can be considered that by performing channel configuration for the chip in the energy storage device to be upgraded based on the target interaction mode to use the target interaction mode to receive the software upgrade protocol sent by the preset device, such that a universal software upgrade protocol may be configured to upgrade software of different version types of energy storage devices to be upgraded, thereby achieving software reuse and improving the efficiency of software upgrade.

Please refer to FIG. 3, FIG. 3 is a third flowchart of a software upgrade method according to an embodiment of the present disclosure.

In some embodiments, the above operation S11 may include the following operations. Operation S31 may include: determining whether the energy storage device to be upgraded has an address self-allocation function. The address self-allocation function is configured to perform the ID allocation work for the second chip. Operation S32 may include: in response to the energy storage device to be upgraded having the address self-allocation function, determining the version type of the energy storage device to be upgraded as the first version.

The address self-allocation function is configured for the first chip to perform the ID allocation work for the second chip. The address self-allocation function may be an ID self-allocation process. The energy storage device to be upgraded having the address self-allocation function may mean that the identifier allocation work for the second chip is performed successfully, that is, at least one of the second chips is successfully allocated ID.

In some embodiments, a low voltage power is supplied to the energy storage device to be upgraded. For example, 12V low voltage power is supplied to the energy storage device to be upgraded.

Then, the chip in the energy storage device to be upgraded starts initialization, including initialization of underlying data, driver, and application layer data, to obtain relevant initialization data. The received initialization data is judged and processed. The first chip BCMU (Battery Cluster Management Unit) in the energy storage device to be upgraded may initiate the ID self-allocation process. When there is a reply from the second chip BSMU (Battery System Management Unit). This reply may indicate that the identifier allocation work for the second chip is performed successfully. The existence of the reply indicates that there are first chip and second chip in the working state in the energy storage device to be upgraded. Furthermore, since the first chip and second chip are only in the working state in the first version of the first version, second version, and third version, the first chip and second chip in the working state indicates that the version type of the energy storage device to be upgraded is the first version.

In some embodiments, after the above operation S31, in response to the energy storage device to be upgraded not having the address self-allocation function, the version type of the energy storage device to be upgraded is determined as a candidate version type. The energy storage device to be upgraded not having the address self-allocation function may mean that the identifier allocation work for the second chip is performed unsuccessfully, that is, within a threshold duration, any second chip is not successfully allocated an ID. The candidate version type may be one of the above second version and third version. In some embodiments, no reply from the second chip BSMU (Battery System Management Unit) being received indicates that no second chip BSMU is in the work state, a second-generation stacked product or parallel-device project corresponding to the candidate version type is determined.

It can be considered that by comparing the first version, second version, and third version, only in the first version can the identifier allocation work be performed for the second chip. This standard is configured to determine whether the version type is the first version, thereby improving the efficiency of determining the version type of the energy storage device to be upgraded.

In some embodiments, the energy storage device to be upgraded in the first version may include multiple second chips, the operation of in response to the version type being the first version, configuring the first chip in the external channel and configuring the second chip in the internal channel, may include the following operation: in response to the version type being the first version, performing address self-allocation for each second chip to obtain allocated second chips; determining the target interaction mode as configuring the first chip in the external channel and configuring each allocated second chip in the internal channel.

Each allocated second chip may mean that each second chip has a successfully allocated an ID.

the process of performing the address self-allocation for the second chip may include following operation. In some embodiments, the first chip BCMU pulls down a hardline, periodically sends clear-original-number instruction to each second chip BSMU with a period of 100ms, allocates an invalid ID 0 to each second chip BSMU, and pulls down the hardline of the second chip BSMU. In some embodiments, when the first chip BCMU detects a condition that the hardline of the second chip BSMU is low and the first chip BCMU does not receive a message with ID 0 for one second, then the first chip BCMU starts the ID allocation work. The second chip BSMU receives the instruction and sets the ID as 0. When the condition that the hardline of the second chip BSMU is low and the first chip BCMU does not receive a message with ID 0 for one second is not satisfied within 5 seconds, the ID allocation work is stopped, a communication error is reported, and then the technical personnel checks the harness connection. In some embodiments, after the first chip BCMU enters the first ID allocation work process, the first chip BCMU first performs open circuit fault diagnosis for the hardline output. When there is a fault, the fault is reported, the allocation fails, and the technical personnel checks the problem. When there is no fault, the first chip BCMU pulls up the hardline, sends an address allocation message to the first second chip BSMU, the second chip BSMU replies with the allocated ID 1 after receiving the message instruction. After the first chip BCMU receives the reply information from the first second chip BSMU, it is considered that the ID allocation for the first second chip BSMU has been completed. The first second chip BSMU pulls up the hardline, and performs open circuit diagnosis for the hardline output. In some embodiments, after completing the first ID allocation work, the first chip BCMU performs a detection work, checks whether the first chip BCMU still receives data with a default ID, when the first chip BCMU still receives data with the default ID, the above process is repeat, the first chip BCMU performs the ID allocation work for the second second chip BSMU, until the first chip BCMU detects that all second chips BSMU pull up the hardline, the first chip BCMU no longer receives data with ID, the ID allocation work is completed, each second chip BSMU obtains its own ID number. When the first chip BCMU does not receive the reply message from the second chip BSMU for more than 5 seconds, a fault is reported, and technical personnel checks the problem.

The above determining the target interaction mode as configuring the first chip in the external channel and configuring the allocated second chip in the internal channel may include: configuring the first chip in the external channel to enable the interaction mode of the first chip to be the internal-external channel interaction, and configuring the allocated second chip in the internal channel to achieve internal communication between the first chip and the allocated second chip. The inverter sends the software upgrade protocol to the first chip, and the first chip sends the software upgrade protocol to the allocated second chip, thus completing the software upgrade of the chip.

It can be considered that in a multi-chip system, each chip needs a unique address, so that the master chip may communicate with them. In the related art, this is achieved through dial switches, the address of each chip is determined by setting the position of the dial switch. However, the related art is costly and manually setting the dial switch is prone to errors, which may cause system failures. In some embodiments of the present disclosure, the allocated second chip may be obtained through the address self-allocation, thereby automating address allocation, reducing manual errors, improving system reliability, and thereby further improving the efficiency of software upgrade.

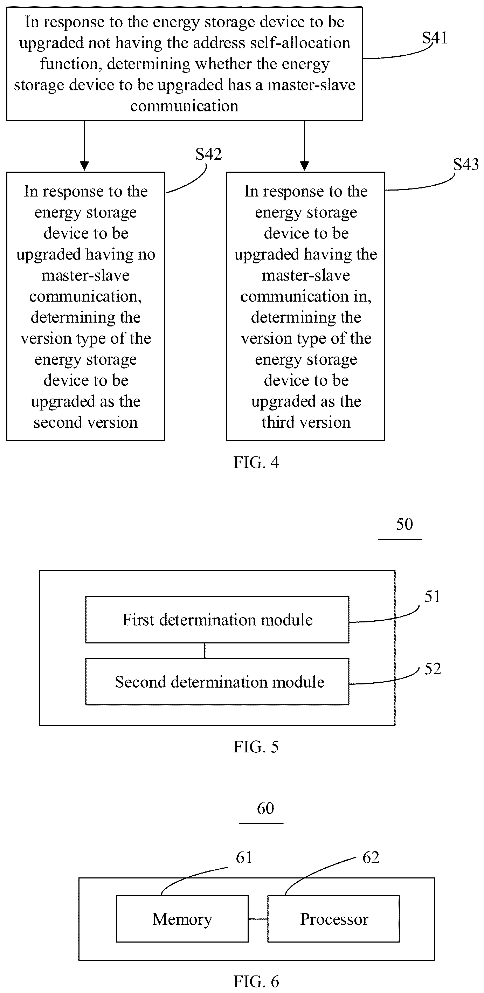

Please refer to FIG. 4, FIG. 4 is a fourth flowchart of a software upgrade method according to an embodiment of the present disclosure.

In some embodiments, the software upgrade method may include operations S41-S43. The operation S41 may include: in response to the energy storage device to be upgraded not having the address self-allocation function, determining whether the energy storage device to be upgraded has a master-slave communication. The operation S42 may include: in response to the energy storage device to be upgraded having no master-slave communication, determining the version type of the energy storage device to be upgraded as the second version. The operation S43 may include: in response to the energy storage device to be upgraded having the master-slave communication in, determining the version type of the energy storage device to be upgraded as the third version.

The master-slave communication may be a master-slave communication of the chip in the energy storage device to be upgraded. In some embodiments, the master-slave communication may indicate whether the types of the chips in the working state in the energy storage device to be upgraded are different.

In some embodiments, when the energy storage device to be upgraded does not have the address self-allocation function, the energy storage device to be upgraded having no master-slave communication may indicate that the number of the types of the chips in the working state in the energy storage device to be upgraded are only one. That is, the chip in the working state in the energy storage device to be upgraded is only the first chip, so that the version type of the energy storage device to be upgraded is determined as the second version.

In some embodiments, when the energy storage device to be upgraded does not have the address self-allocation function, the energy storage device to be upgraded having the master-slave communication may indicate that multiple types of chips in the working state in the energy storage device to be upgraded. That is, the chips in the working state in the energy storage device to be upgraded may be the first chip and the third chip, so that the version type of the energy storage device to be upgraded is determined as the third version.

It can be considered that by comparing the first version, second version, and third version, when the energy storage device to be upgraded does not have the address self-allocation function, only the third version of the energy storage device to be upgraded has the master-slave communication. This standard is configured to determine whether the version type is the third version or the second version, thereby improving the efficiency of determining the version type of the energy storage device to be upgraded.

In some embodiments, the energy storage device to be upgraded in the third version may include multiple third chips, the in response to the version type being the third version, configuring the first chip in the internal channel and configuring the third chip in the external channel, may include: in response to the version type being the third version, performing a cluster address allocation for the third chip to obtain an allocated third chip; and determining the target interaction mode as configuring the first chip in the internal channel and configuring the allocated third chip in the external channel.

When the energy storage device to be upgraded is in the third version, the energy storage device to be upgraded may include several battery clusters, rather than a single cluster for use, so that it is necessary to number each battery cluster. The cluster address allocation is configured to number each battery cluster in the energy storage device to be upgraded. The above several battery clusters may be the first battery cluster where the third chip is located. The above several battery clusters may be the second battery cluster where the first chip and/or second chip are located. It can be understood that in the above application scenarios where the energy storage device to be upgraded is adjusted from the first version to the third version, or from the second version to the third version, the battery pack managed by the first chip and second chip in the original first version, or the battery pack managed by the first chip in the second version, serves as the second battery cluster by default, because the high-voltage box in the energy storage device to be upgraded in the third version is special, including the third chip BAMU inside, therefore the battery pack managed by the third chip BAMU switched to the working state serves as the first battery cluster.

When the version type of the energy storage device to be upgraded is the third version, the target interaction mode of each chip in the energy storage device to be upgraded is determined as the above third target interaction mode. The allocated third chip is configured in the external channel to enable the interaction mode of the allocated third chip to be the internal-external channel interaction, thereby achieving that the allocated third chip may communicate internally with the first chip, and the allocated third chip may communicate externally with the preset device. The first chip is configured in the internal channel may achieve the internal communication between the first chip and the allocated third chip. The inverter sends the software upgrade protocol to the allocated third chip, and the allocated third chip sends the software upgrade protocol to the first chip, thus completing the software upgrade of the chip. In some embodiments, in the third target interaction mode, the interaction mode of the allocated third chip is the internal-external channel interaction. The inverter sends the software upgrade protocol to the allocated third chip, and the allocated third chip sends the software upgrade protocol to the first chip, thus completing the software upgrade of the chip.

In some embodiments, the above relay control process may include following operation. When it is detected that the switch power supply is activated and powered on, the first chip BCMU and the second chip BSMU perform chip self-test. After the self-test is completed, the first chip BCMU obtains data from second chip BSMU for verification judgment. When a condition that the total voltage difference between cluster 1 and cluster 2 is 3V × the number of packs per cluster and the state of charge (SOC) value of cluster 1 and cluster 2 is within a preset percentage is satisfied, then it is considered that the direct parallel-device condition is satisfied. For example, the state of charge (SOC) may refer to the charging state of the car battery. For example, the above preset percentage may be 30%. If the condition is not satisfied, it is considered that the direct parallel-device condition is not satisfied. It can be understood that when the direct parallel-device condition is not satisfied, it is necessary to perform a separate charging operation, and then the operation corresponding the direct parallel-device condition being satisfied is performed.

In some embodiments, when the direct parallel-device condition is satisfied, the following operation is performed. Priority is given to applying high voltage to the slave cluster, the main negative relay is close and the pre-charge relay initiates the pre-charge process, when the voltage difference between the front and rear ends of the pre-charge resistor (the difference between a voltage of the battery terminal BMS_FuseVol and a voltage at the rear end of the pre-charge resistor BMS_HVVol) is within 10 volts, it is considered that the high voltage condition is satisfied, the main positive relay is closed, the pre-charge relay is disconnected, and the operation of applying high voltage to the slave cluster is completed. After the operation of applying high voltage to the slave cluster is completed, the operation of applying high voltage to the master cluster for parallel-device is performed, the main negative relay and the pre-charge relay of the master cluster are closed, it is determined whether the current of the master cluster at this time (there is a voltage difference between the two clusters, so that there is be current) is within 1 ampere, and the difference between the voltage of the battery terminal BMS_FuseVol and the voltage at the rear end of the pre-charge resistor BMS_HVVol is within 5V for 3 seconds, the main positive relay of the master cluster is closed, and the pre-charge relay is disconnected. In some embodiments, when the direct parallel-device condition is not satisfied, the following operation is performed. Priority is given to applying high voltage to the master cluster, after pre-charge is completed, charging is performed, after full charge is completed (i.e., the SOC equals 100% and the maximum cell voltage is greater than 3.55V, with both conditions persisting for 3 seconds), the master cluster relay is cut off, applying high voltage to the slave cluster is performed, charging is performed, after charging is completed, idled is performed for a preset duration before entering a parallel-device process. It can be understood that entering the parallel-device process may be performing the operation corresponding the direct parallel-device condition being satisfied. The above preset duration may be 10 min.

It can be understood that the above parallel-device condition may mean that the energy storage device to be upgraded is in the third version. The above master cluster and the above cluster 1 may refer to the above first battery cluster. The above slave cluster and the above cluster 2 may refer to the above second battery cluster.

It can be considered that in a multi-chip system, each chip needs a unique address, so that the master chip may communicate with them. In the related art, this is achieved through dial switches, the address of each chip is determined by setting the position of the dial switch. However, the related art is costly and manually setting the dial switch is prone to errors, which may cause system failures. In some embodiments of the present disclosure, the allocated third chip may be obtained through the cluster address self-allocation, thereby automating address allocation, reducing manual errors, improving system reliability, and thereby further improving the efficiency of software upgrade.

The above solution, by determining the version type of the energy storage device to be upgraded, based on the version type of the energy storage device to be upgraded, determining a target interaction mode of at least one chip in the energy storage device to be upgraded to use the target interaction mode to receive a software upgrade protocol sent by a preset device, such that a universal software upgrade protocol may be configured to upgrade software of different version types of energy storage devices to be upgraded, thereby achieving software reuse and improving the efficiency of software upgrade.

Please refer to FIG. 5, FIG. 5 is a structural schematic diagram of a software upgrade apparatus according to an embodiment of the present disclosure. The software upgrade apparatus 50 is disposed in an energy storage device to be upgraded, the software upgrade apparatus 50 may include a first determination module 51 and a second determination module 52. The first determination module 51 is configured to determine the version type of the energy storage device to be upgraded, and the second determination module 52 is configured to determine a target interaction mode of the chip in the energy storage device to be upgraded based on the version type of the energy storage device to be upgraded. It can be understood that the software upgrade apparatus 50 may be disposed in the first chip. A management unit related to the first chip is a Battery Cluster Management Unit (BCMU).

The above solution, by determining the version type of the energy storage device to be upgraded, based on the version type of the energy storage device to be upgraded, determining a target interaction mode of at least one chip in the energy storage device to be upgraded to use the target interaction mode to receive a software upgrade protocol sent by a preset device, such that a universal software upgrade protocol may be configured to upgrade software of different version types of energy storage devices to be upgraded, thereby achieving software reuse and improving the efficiency of software upgrade.

The functions performed by each module please refer to the software upgrade method, which will not be repeated here.

Please refer to FIG. 6, FIG. 6 is a structural schematic diagram of an electronic device according to an embodiment of the present disclosure. The electronic device 60 may include a memory 61 and a processor 62, the processor 62 is configured to perform a program instruction stored in the memory 61 to implement the operations in the above software upgrade method embodiments. In some embodiments, the electronic device 60 may include but is not limited to: a microcomputer or a server. In addition, the electronic device 60 may include a mobile device such as a laptop or a tablet computer, which is not limited here.

In some embodiments, the processor 62 is configured to control itself and the memory 61 to implement the operations in the above software upgrade method embodiments. The processor 62 may be called a CPU (Central Processing Unit). The processor 62 may be an integrated circuit chip with signal processing capability. The processor 62 may be a general-purpose processor, a digital signal processor (DSP), an application specific integrated circuit (ASIC), a field-programmable gate array (FPGA) or other programmable logic device, a discrete gate or transistor logic device, a discrete hardware component. The general-purpose processor may be a microprocessor or the processor may be any conventional processor, etc. In addition, the processor 62 may be implemented by integrated circuit chips together.

The above solution, by determining the version type of the energy storage device to be upgraded, based on the version type of the energy storage device to be upgraded, determining a target interaction mode of at least one chip in the energy storage device to be upgraded to use the target interaction mode to receive a software upgrade protocol sent by a preset device, such that a universal software upgrade protocol may be configured to upgrade software of different version types of energy storage devices to be upgraded, thereby achieving software reuse and improving the efficiency of software upgrade.

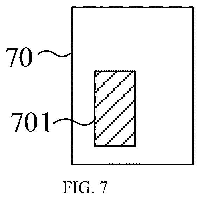

Please refer to FIG. 7, FIG. 7 is a structural schematic diagram of a computer-readable storage medium according to an embodiment of the present disclosure. The computer-readable storage medium 70 stores a program instruction 701, the program instruction 701, when executed by a processor, implements the operations in any of the above software upgrade method embodiments.

The above solution, by determining the version type of the energy storage device to be upgraded, based on the version type of the energy storage device to be upgraded, determining a target interaction mode of at least one chip in the energy storage device to be upgraded to use the target interaction mode to receive a software upgrade protocol sent by a preset device, such that a universal software upgrade protocol may be configured to upgrade software of different version types of energy storage devices to be upgraded, thereby achieving software reuse and improving the efficiency of software upgrade.

In some embodiments, the system provided by the embodiments of the present disclosure has functions or includes modules that may be configured to perform the methods described in the above method embodiments, and their implementation may refer to the description of the above method embodiments, which will not be repeated here for brevity.

The description of each embodiment above tends to emphasize the differences between the embodiments, and their same or similar parts may be referred to each other, which will not be repeated here for brevity.

In several embodiments provided herein, it should be understood that the disclosed apparatus may be implemented in other ways. For example, the device embodiments described above are merely illustrative. For example, the division of the above units is only a logical function division. In actual implementation, there may be another division manner. For example, multiple units or components may be combined or integrated into another system, or some features can be ignored or not executed. In addition, the mutual coupling or direct coupling or communication connection shown or discussed may be an indirect coupling or communication connection through some interfaces, devices or units, and may be electrical or in other forms.

In addition, each functional unit in each embodiment of the present disclosure may be integrated into one processing unit, or each unit may exist physically separately. Optionally, two or more units may also be integrated into one unit. The above integrated unit can be implemented in the form of hardware or in the form of a software functional module.

The above-described integrated unit may be stored in a computer-readable memory if the integrated unit is implemented in the form of a software functional module and sold or used as a standalone product. Based on such understanding, the technical solution of the present disclosure, in essence or the contribution to the prior art, or all or part of the technical solution may be embodied in the form of a software product. The software product may be stored in a memory. The software product may include a number of instructions causing a computer device (the computer device may be a personal computer, a server or a network device, and the like) or a processor to perform all or parts of the operations of the above-described methods of various embodiments of the present disclosure. The foregoing memory may include various media which are able to store program codes. The media may include a U disk, a removable hard disk, a Read-Only Memory (ROM), a Random Access Memory (RAM), a magnetic disk, an optical disk, and the like.

## Claims

1. A software upgrade method, performed by an energy storage device to be upgraded, and the method **characterized by** comprising:
determining (S11) a version type of the energy storage device to be upgraded; and
based on the version type of the energy storage device to be upgraded, determining (S12) a target interaction mode of at least one chip in the energy storage device to be upgraded to use the target interaction mode to receive a software upgrade protocol sent by a preset device, wherein an interaction mode of the chip comprises at least one of an internal channel interaction, an external channel interaction, and an internal-external channel interaction.

2. The method according to claim 1, wherein the based on the version type of the energy storage device to be upgraded, determining (S12) a target interaction mode of at least one chip in the energy storage device to be upgraded, comprises:
determining (S21) whether the at least one chip comprises a target chip; wherein the target interaction mode of the target chip is inconsistent with a current interaction mode of the at least one chip; and
adjusting (S22) the current interaction mode of the target chip to the target interaction mode.

3. The method according to claim 2, wherein the version type comprises one of a first version, a second version, and a third version; in the energy storage device to be upgraded in the first version, a first chip and a second chip are in a working state; in the energy storage device to be upgraded in the second version, the first chip is in the working state; in the energy storage device to be upgraded in the third version, the first chip and a third chip are in the working state;
the adjusting (S22) the current interaction mode of the target chip to the target interaction mode, comprises:
in a case where the version type is the first version, configuring the first chip in an external channel and configuring the second chip in an internal channel to enable the first chip in the external channel to receive the software upgrade protocol sent by the preset device;
in a case where the version type is the second version, configuring the first chip in the external channel to enable the first chip in the external channel to receive the software upgrade protocol sent by the preset device;
in a case where the version type is the third version, configuring the first chip in the internal channel and configuring the third chip in the external channel to enable the third chip in the external channel to receive the software upgrade protocol sent by the preset device.

4. The method according to claim 3, wherein
in a case where the version type is the first version, the target interaction mode comprises a first target interaction mode; in the first target interaction mode, an interaction mode of the first chip is the internal-external channel interaction, and an interaction mode of the second chip is the internal channel interaction;
in a case where the version type is the second version, the target interaction mode comprises a second target interaction mode; in the second target interaction mode, the interaction mode of the first chip is an external channel interaction;
in a case where the version type is the third version, the target interaction mode comprises a third target interaction mode; in the third target interaction mode, the interaction mode of the third chip is the internal-external channel interaction, and the interaction mode of the first chip is the internal channel interaction.

5. The method according to claim 4, wherein
in a case where the version type is the first version, the first chip communicates internally with the second chip and communicates externally with the preset device via the internal-external channel interaction;
in a case where the version type is the second version, the first chip communicates externally with the preset device via the external channel interaction;
in a case where the version type is the third version, the third chip communicates internally with the first chip and communicate externally with the preset device via the internal-external channel interaction.

6. The method according to claim 5, wherein
in a case where the version type is the first version, the first chip receives the software upgrade protocol from the preset device, and sends the software upgrade protocol to the second chip;
in a case where the version type is the second version, the first chip receives the software upgrade protocol from the preset device;
in a case where the version type is the third version, the third chip receives the software upgrade protocol from the preset device, and sends the software upgrade protocol to the first chip.

7. The method according to claim 5, wherein the preset device is an inverter.

8. The method according to claim 3, wherein the determining (S11) a version type of the energy storage device to be upgraded, comprises:
determining (S31) whether the energy storage device to be upgraded has an address self-allocation function, wherein the address self-allocation function is configured to perform an identifier allocation work for the second chip; and
in a case where the energy storage device to be upgraded has the address self-allocation function, determining (S32) the version type of the energy storage device to be upgraded as the first version.

9. The method according to claim 8, wherein the determining (S11) a version type of the energy storage device to be upgraded, comprises:
in a case where the energy storage device to be upgraded does not have the address self-allocation function, determining (S41) whether the energy storage device to be upgraded has a master-slave communication;
in a case where the energy storage device to be upgraded does not have the master-slave communication, determining (S42) the version type of the energy storage device to be upgraded as the second version;
in a case where the energy storage device to be upgraded has the master-slave communication, determining (S43) the version type of the energy storage device to be upgraded as the third version.

10. The method according to claim 9, wherein the master-slave communication indicates that a plurality of types of chips in the working state.

11. The method according to claim 3, wherein the energy storage device to be upgraded in the first version comprises a plurality of second chips, the in a case where the version type is the first version, configuring the first chip in an external channel and configuring the second chip in an internal channel, comprises:
the in a case where the version type is the first version, performing an address self-allocation for each of the plurality of second chips to obtain a plurality of allocated second chips;
determining the target interaction mode as configuring the first chip in the external channel and configuring the plurality of allocated second chips in the internal channel.

12. The method according to claim 3, wherein the energy storage device to be upgraded in the third version comprises a plurality of the third chips, the in a case where the version type is the third version, configuring the first chip in the internal channel and configuring the third chip in the external channel, comprises:
in a case where the version type is the third version, performing a cluster address allocation for each of the plurality of third chips to obtain a plurality of allocated third chips;
determining the target interaction mode as configuring the first chip in the internal channel and configuring the plurality of allocated third chips in the external channel.

13. A software upgrade apparatus (50), disposed in an energy storage device to be upgraded, and the apparatus **characterized by** comprising:
a first determination module (51), configured to determine a version type of the energy storage device to be upgraded; and
a second determination module (52), configured to, based on the version type of the energy storage device to be upgraded, determine a target interaction mode of at least one chip in the energy storage device to be upgraded.

14. An electronic device (60), **characterized by** comprising a memory (61) and a processor (62); wherein the memory (61) stores a program instruction, and the processor (62) is configured to call the program instruction from the memory (61) to perform the method according to any one of claims 1-12.

15. A computer-readable storage medium (70), **characterized by** storing a program instruction (701); wherein the program instruction (701), when executed by a processor, is configured to implement the method according to any one of claims 1-12.
